# EUROPEAN PATENT APPLICATION

(11) **EP 4 685 865 A1**
(43) Date of publication of application: **28.01.2026**
(21) Application number: 25185662.1
(22) Date of filing: 26.06.2025
(51) Int. Cl.: H01M 4/134, H01M 4/36, H01M 4/38, H01M 4/587, H01M 4/62, H01M 10/052, H01M 4/02

(54) **NEGATIVE ELECTRODE ACTIVE MATERIAL, RECHARGEABLE LITHIUM BATTERY CONTAINING THE SAME, AND METHOD FOR PREPARING THE SAME**

(30) Priority: 25.07.2024 KR 20240098546
(71) Applicant: SAMSUNG SDI CO., LTD., Yongin-si, Gyeonggi-do 17084 (KR)
(72) Inventor: SHIN, Changsu, 17084 Yongin-si (KR)
(74) Representative: Marks & Clerk LLP

(57) **Abstract**

A negative electrode active material, a rechargeable lithium battery including the same, and a method for preparing the same are provided. The negative electrode active material includes an aggregate in which at least two composites are aggregated, the composites each including silicon (Si) and carbon (C), and a coating layer around the aggregate, wherein the composites each include a core containing crystalline silicon, a first shell containing amorphous silicon on the core, and a second shell containing a first amorphous carbon on the first shell, and wherein the coating layer contains a second amorphous carbon.

## Description

### BACKGROUND

### A. Field

The present invention relates to a negative electrode active material, a rechargeable lithium battery containing the same, and a method for preparing the same.

### B. Description of the Related Art

Recently, the rapid spread of battery-powered electronics, such as mobile phones, laptop computers, and/or electric vehicles, has driven a sharp rise in the market for rechargeable batteries having high energy densities and high capacities. Accordingly, extensive research efforts are directed towards improving the performance of rechargeable batteries (such as rechargeable lithium batteries), for example, in terms of energy density, cycle life, and safety.

Rechargeable lithium batteries may include: a positive electrode and a negative electrode, each including an active material that allows intercalation and deintercalation of lithium ions; and an electrolyte solution. The batteries produce electrical energy from redox reactions that take place as lithium ions are intercalated into or deintercalated from the positive electrode and the negative electrode.

The above information disclosed in this Background section is intended to enhance understanding of the background of the disclosure and may contain information that does not constitute prior art.

### SUMMARY

The present invention is directed toward a negative electrode active material with enhanced (*e.g.*, excellent or suitable) capacity, efficiency, and lifespan characteristics, a rechargeable lithium battery including the same, and a method for preparing the same.

The present invention is directed to a negative electrode active material including particles having a shell and a crystalline silicon core that are aggregated and coated with an amorphous carbon to provide a negative electrode active material with enhanced (e.g., excellent or suitable) capacity, efficiency and lifespan characteristics.

Additional aspects will be set forth in part in the description which follows and, in part, will be apparent from the description, or may be learned by practice of the presented embodiments of the disclosure.

In a first aspect, the present invention provides a negative electrode active material including an aggregate in which at least two composites are aggregated, the composites each including silicon (Si) and carbon (C), and a coating layer around (*e.g.*, surrounding) the aggregate, wherein the composites each include a core containing crystalline silicon, a first shell containing amorphous silicon on the core, and a second shell containing a first amorphous carbon on the first shell, and wherein the coating layer contains a second amorphous carbon.

In a second aspect, the present invention provides a rechargeable lithium battery including a positive electrode, a negative electrode, and a separator, wherein the negative electrode includes a current collector and a negative electrode active material layer, the negative electrode active material layer includes the aforementioned negative electrode active material described above and graphite, a weight percentage of the negative electrode active material is in a range of about 5 wt% to about 40 wt% with respect to a total weight of the negative electrode active material layer, and a weight percentage of the graphite is in a range of about 60 wt% to about 95 wt% with respect to the total weight of the negative electrode active material layer.

In a third aspect of the present invention there is provided a method for preparing a negative electrode active material including the steps of: (a) spray drying a dispersion containing a first silicon precursor and a solvent to prepare a first particle, (b) performing a first heat treatment on the first particle and a second silicon precursor at a temperature in a range of about 450 °C to about 600 °C to prepare a second particle, (c) performing a second heat treatment on the second particle and a first carbon precursor at a temperature in a range of about 800 °C to about 1000 °C to prepare a third particle, and (d) performing a third heat treatment on the third particle and a second carbon precursor at a temperature in a range of about 800 °C to about 1000 °C.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIG. 1 is a simplified conceptual view showing a rechargeable lithium battery according to one or more embodiments of the present disclosure;
FIGS. 2 - 5 are schematic views each showing a rechargeable lithium battery according to embodiments of the present disclosure, where FIG. 2 shows a cylindrical battery, FIG. 3 shows a prismatic battery, and FIGS. 4 and 5 show pouch-type (kind) batteries, according to embodiments of the present disclosure;
FIG. 6 is a cross-sectional view showing a negative electrode for a rechargeable lithium battery according to one or more embodiments of the present disclosure;
FIG. 7 is a cross-sectional view for describing a negative electrode active material according to one or more embodiments of the present disclosure;
FIG. 8 is a cross-sectional view for describing a composite according to one or more embodiments of the present disclosure;
FIG. 9 is a cross-sectional view for describing a negative electrode active material according to one or more embodiments of the present disclosure;
FIG. 10 is a flowchart for describing a method for preparing a negative electrode active material according to one or more embodiments of the present disclosure; and
FIG. 11 is a graph showing charge/discharge characteristics of rechargeable lithium batteries according to embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

It will be understood that when an element, such as an area, layer, film, region or portion, is referred to as being "on" another element, it can be directly on the other element, or one or more intervening elements may be present. In contrast, when an element or layer is referred to as being "directly on" or "immediately adjacent to" another element or layer, there are no intervening elements or layers present. In addition, it will also be understood that when an element is referred to as being "between" two elements, it can be the only element between the two elements, or one or more intervening elements may also be present.

Unless otherwise noted, like reference numerals denote like elements throughout the attached drawings and the written description, and thus, duplicative descriptions thereof may not be provided. In the drawings, the relative sizes (e.g., including lengths, widths and thicknesses) of elements, layers, and regions may be exaggerated for clarity.

As used herein, the singular forms "a," "an" and "the" are intended to include the plural forms as well, unless the context clearly indicates otherwise. In addition, unless otherwise specified, the phrase "A or B" may indicate "A but not B", "B but not A", or "A and B".

It will be further understood that the terms "comprises," "comprising," "includes," "including," "have," "having," "contain," and "containing," when used in this specification, specify the presence of the stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having," "contains/containing," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

As used herein, the term "combination thereof" may refer to a mixture, a stack, a composite, a copolymer, an alloy, a blend, or a reaction product.

In the present disclosure, when particles are spherical, "diameter" indicates a particle diameter or an average particle diameter, and when the particles are non-spherical, the "diameter" indicates a major axis length or an average major axis length. Unless otherwise defined herein, a particle diameter may be an average particle diameter. In addition, a particle diameter is defined as an average particle diameter (D50) indicating the diameter of particles having a cumulative volume of 50 volume% in the particle size distribution, and refers to the value of the particle size corresponding to 50% from the smallest particle when the total number of particles is 100% in the distribution curve accumulated in the order of the smallest particle size to the largest particle size. The average particle diameter (D50) may be measured by a method widely available to and/or utilized by those skilled in the art, for example, by a particle size analyzer, a transmission electron micrograph (TEM) image, or a scanning electron micrograph (SEM) image. Alternatively, the average particle diameter (D50) may be measured by a measurement device using dynamic light-scattering, wherein data analysis is conducted to count the number of particles for each particle size range, and an average particle diameter (D50) value may then be obtained through calculation. Also, a laser scattering method may be utilized to measure the average particle diameter (D50). In the measuring using the laser diffraction method, target particles are dispersed in a dispersion medium, introduced into a commercially available laser diffraction particle diameter measuring device (*e.g.*, MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the terms "use," "using," and "used" may be considered synonymous with the terms "utilize," "utilizing," and "utilized," respectively.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

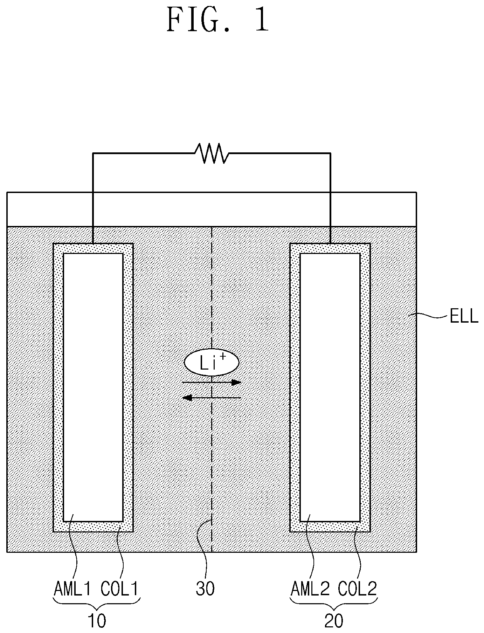

FIG. 1 is a simplified conceptual view showing a rechargeable lithium battery according to one or more embodiments of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced and/or apart (*e.g.*, spaced apart or separated) from each other by the separator 30. The separator 30 may be arranged between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

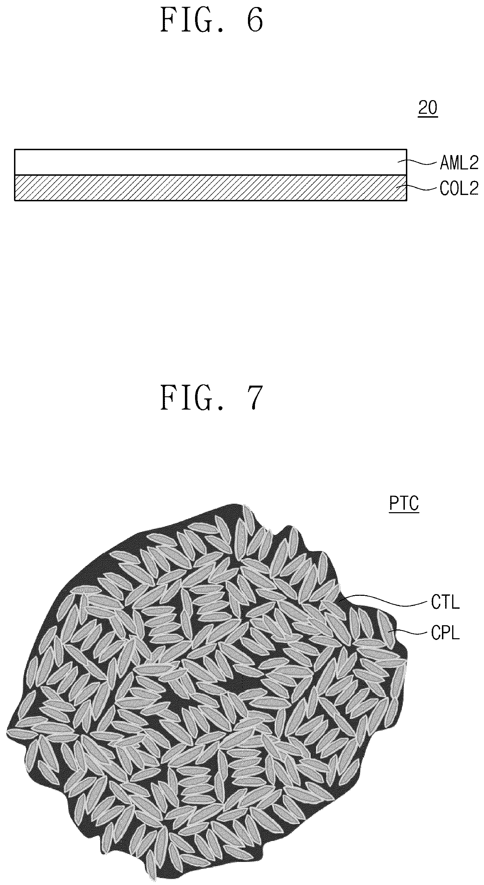

The negative electrode 20 will be described in more detail later with reference to FIG. 6.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive material.

For example, the positive electrode 10 may further include an additive capable of serving as a sacrificial positive electrode.

The positive electrode active material layer AML1 may contain about 90 wt% to about 99 wt% of the positive electrode active material with respect to 100 wt% of the positive electrode active material layer AML1. With respect to 100 wt% of the positive electrode active material layer AML1, the amount of each of the binder and the conductive material may be about 0.5 wt% to about 5 wt%.

The binder may serve to attach (*e.g.,* effectively attach) positive electrode active material particles to one another and also to attach (*e.g.,* effectively attach) the positive electrode active material to the current collector COL1. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but the present disclosure is not limited thereto.

The conductive material may be used to impart conductivity to the electrode (*e.g.,* may be a conductor). Any material that does not cause chemical changes and is an electron conductive material may be usable in batteries. Examples of the conductive material may include a carbon-based material such as natural graphite, artificial graphite, carbon black, acetylene black, ketjen black, carbon fiber, carbon nanofibers, and/or carbon nanotubes (*e.g.,* single-walled carbon nanotubes (SWCNT) and/or multi-walled carbon nanotubes (MWCNT)); a metal-based material including copper, nickel, aluminium, silver, and/or the like in a form of a metal powder or metal fibers; a conductive polymer such as a polyphenylene derivative; and/or a (e.g., any suitable) combination thereof.

Aluminium (Al) may be used as the current collector COL1, but the present disclosure is not limited thereto.

For example, an area of the current collector COL1 may be substantially the same as an area of the positive electrode active material layer AML1. Herein, substantially the same area may indicate that a difference between the two areas is within about 10%. For another example, an area of the current collector COL1 may be different from an area of the positive electrode active material layer AML1. Herein, different areas may indicate that a difference between the two areas is greater than about 10%. For example, an area of the current collector COL1 may be greater than an area of the positive electrode active material layer AML1.

### Positive Electrode Active Material

A compound capable of reversibly intercalating and deintercalating lithium (lithiated intercalation compound) may be used as a positive electrode active material in a positive electrode active material layer AML1. For example, at least one of the composite oxides of lithium and a metal selected from among cobalt, manganese, nickel, and/or a (*e.g.*, any suitable) combination thereof may be used.

The composite oxide may be a lithium transition metal composite oxide, and examples thereof include lithium nickel-based oxide, lithium cobalt-based oxide, lithium manganese-based oxide, lithium iron phosphate-based compound, cobalt-free nickel-manganese-based oxide, and/or a (*e.g.*, any suitable) combination thereof.

For example, a compound (or compounds) represented by any one or more of (*e.g.,* selected from among) the following Formulas may be used (as the positive electrode active material): LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and/or LiₐFePO₄ (0.90≤a≤1.8).

In Formulas above, A is Ni, Co, Mn, and/or a (*e.g.*, any suitable) combination thereof, X is Al, Ni, Co, Mn, Cr, Fe, Mg, Sr, V, a rare earth element, and/or a (*e.g.*, any suitable) combination thereof, D is O, F, S, P, and/or a (*e.g.*, any suitable) combination thereof, G is Al, Cr, Mn, Fe, Mg, La, Ce, Sr, V, and/or a (*e.g.*, any suitable) combination thereof, and L¹ is Mn, Al, and/or a (*e.g*., any suitable) combination thereof.

For example, the positive electrode active material may be a high nickel-based positive electrode active material having a nickel content (*e.g*., amount) of about 80 mol% or greater, about 85 mol% or greater, about 90 mol% or greater, about 91 mol% or greater, or about 94 mol% or greater, with respect to 100 mol% of metals excluding lithium in the lithium transition metal composite oxide. The high nickel-based positive electrode active material may achieve high capacity and thus be applied to high-capacity, high-density rechargeable lithium batteries.

### Separator 30

Depending on the type (kind) of the rechargeable lithium battery, the separator 30 may be present between the positive electrode 10 and the negative electrode 20. The separator 30 may include polyethylene, polypropylene, polyvinylidene fluoride, a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (*e.g.*, any suitable) combination thereof on one or both surfaces (*e.g*., opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyaryl ether ketone, polyetherimide, polyamideimide, polybenzimidazole, polyether sulfone, polyphenylene oxide, a cyclic olefin copolymer, polyphenylene sulfide, polyethylene naphthalate, glass fibers, polytetrafluoroethylene (*e.g.,* TEFLON^{®}), and/or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (*e.g.,* any suitable) combination thereof, but the present disclosure is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (*e.g.,* any suitable) combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), fluoroethylene carbonate (FEC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like, and the aprotic solvent may include nitriles such as R-CN (where R is a C2 to C20 linear, branched, or cyclic hydrocarbon group and may include a double bond, an aromatic ring, or an ether group); amides such as dimethylformamide; dioxolanes such as 1,3-dioxolane, 1,4-dioxolane; sulfolanes, and/or the like.

The non-aqueous organic solvents may be used alone or in combination of two or more.

In one or more embodiments, if (*e.g.,* when) using a carbonate-based solvent, a cyclic carbonate and a chain carbonate may be mixed and used, and the cyclic carbonate and the chain carbonate may be mixed in a volume ratio in a range of about 1:1 to about 1:9.

The lithium salt dissolved in the organic solvent supplies lithium ions in a battery, enables the basic operation of the rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluoro(oxalato)borate (LiDFOB), lithium difluorobis(oxalato)phosphate (LiDFBOP), and/or lithium bis(oxalato) borate(LiBOB).

### Rechargeable Lithium Battery

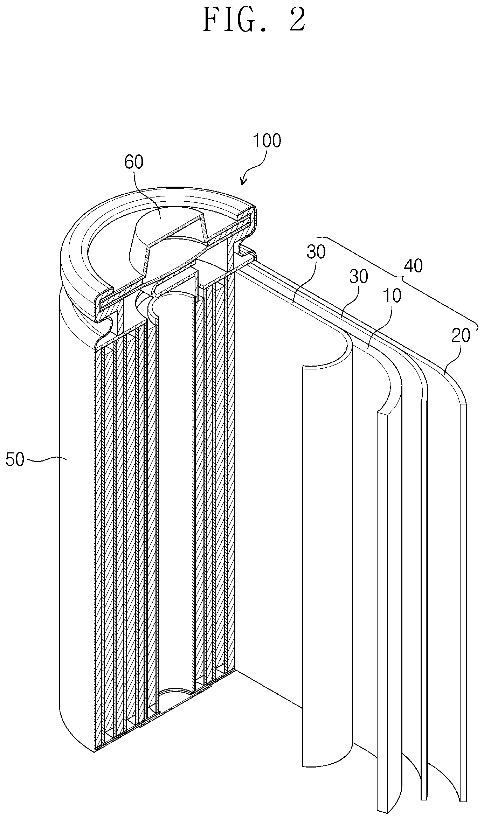

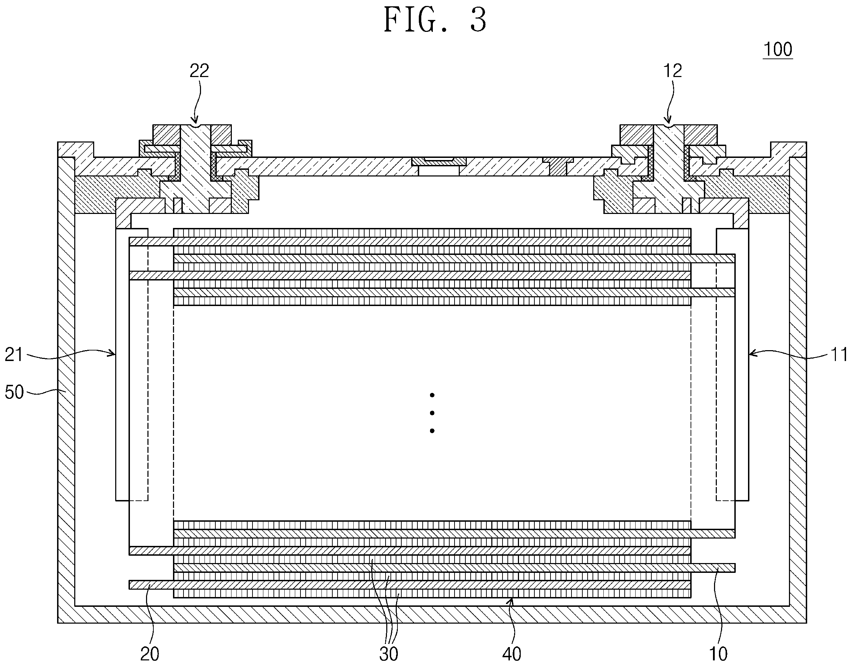

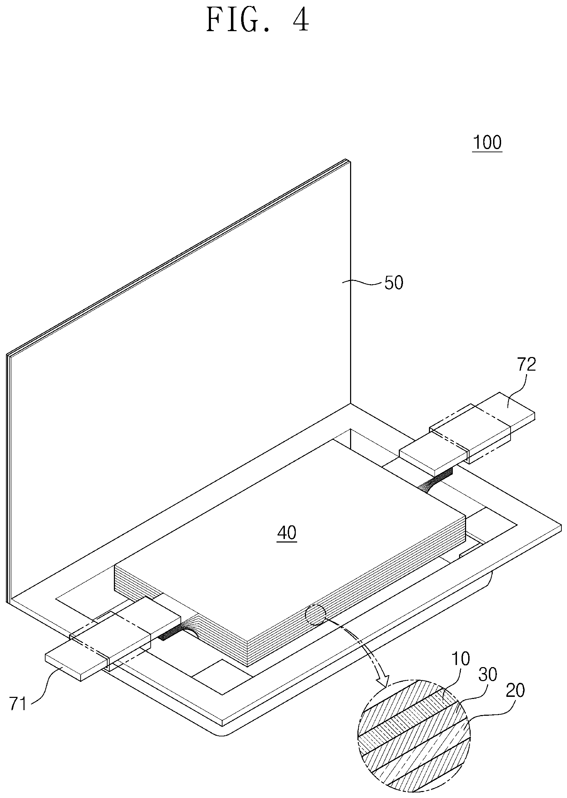

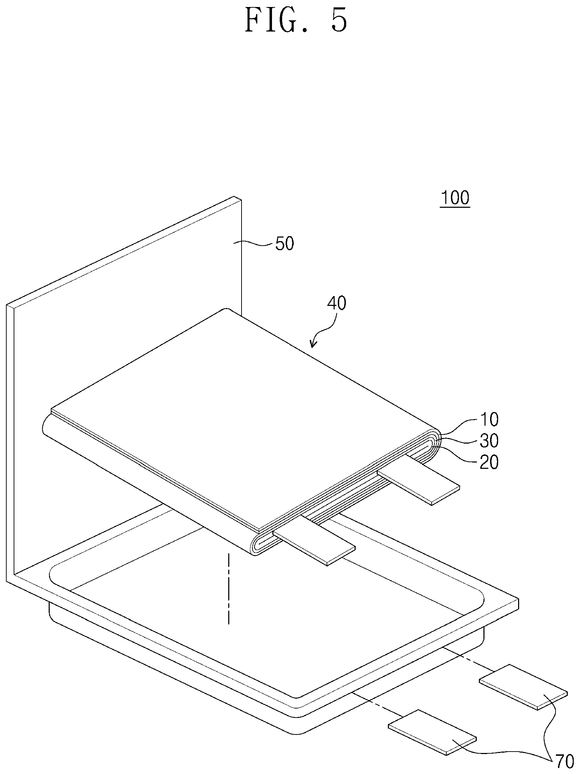

The rechargeable lithium battery may be classified into cylindrical, prismatic, pouch, or coin-type (kind) batteries, and/or the like depending on their shape. FIGS. 2 to 5 are schematic views each showing a rechargeable lithium battery according to one or more embodiments of the present disclosure, and FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown, for example, in FIG. 2. As shown, for example, in FIG. 3, the rechargeable lithium battery 100 may include a positive electrode lead tab 11, a positive electrode terminal 12, a negative electrode lead tab 21, and a negative electrode terminal 22. As shown, for example, in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

### Negative Electrode 20

FIG. 6 is a cross-sectional view showing a negative electrode 20 according to one or more embodiments of the present disclosure. Referring to FIG. 6, the negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material.

For example, the negative electrode active material layer AML2 may include about 90 wt% to about 99.5 wt% of the negative electrode active material, about 0.5 wt% to about 5 wt% of the binder, and about 0 wt% to about 5 wt% of the conductive material.

The binder may serve to attach (e.g., effectively attach) the negative electrode active material particles to each other and also to attach (*e.g.,* effectively attach) the negative electrode active material to the current collector COL2. The binder may include a non-aqueous binder, an aqueous binder, a dry binder, and/or a (*e.g.,* any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a (*e.g.,* any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a (*e.g.,* any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (*e.g.,* any suitable) combination thereof.

The conductive material may be used to impart conductivity to the electrode (*e.g.,* may be a conductor). Any material that does not cause chemical changes and is an electron conductive material may be usable as the conductive material in the batteries. Examples of the conductive material may include: a carbon-based material such as natural graphite, artificial graphite, carbon black, acetylene black, Ketjen black, carbon fiber, carbon nanofibers, and/or carbon nanotubes; a metal-based material including copper, nickel, aluminium, silver, and/or the like, in a form of a metal powder or metal fibers; a conductive polymer such as a polyphenylene derivative; and/or a (*e.g.,* any suitable) mixture thereof.

The current collector COL2 may be selected from among a copper foil, a nickel foil, a stainless steel foil, a titanium foil, a nickel foam, a copper foam, a polymer substrate coated with a conductive metal, and/or a (*e.g.,* any suitable) combination thereof.

For example, an area of the current collector COL2 may be substantially the same as an area of the negative electrode active material layer AML2. For another example, an area of the current collector COL2 may be different from an area of the negative electrode active material layer AML2. For example, an area of the current collector COL2 may be greater than an area of the negative electrode active material layer AML2.

### Negative Electrode Active Material

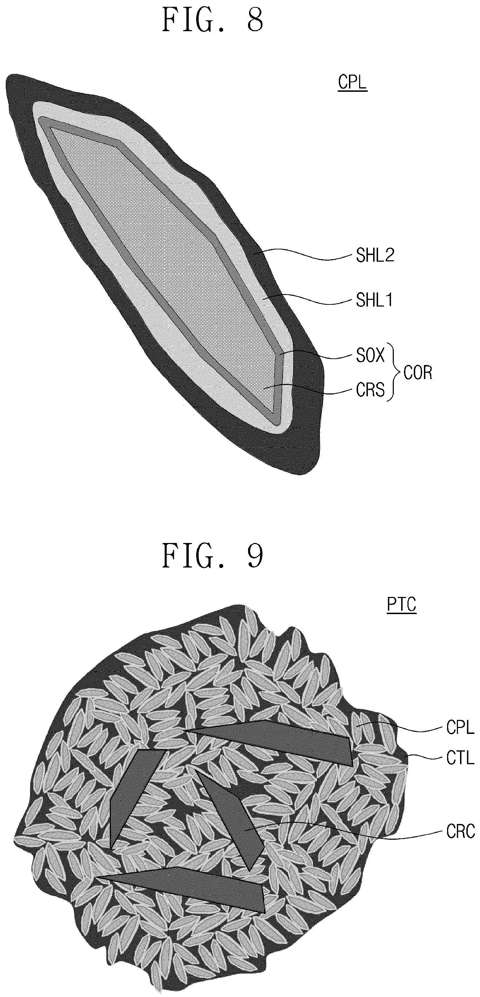

FIG. 7 is a schematic cross-sectional view for describing a negative electrode active material according to one or more embodiments of the present disclosure. FIG. 8 is a schematic cross-sectional view for describing the microscopic form of each composite according to one or more embodiments of the present disclosure.

Referring to FIG. 7, a negative electrode active material PTC may include an aggregate and a coating layer CTL.

The negative electrode active material PTC may have an average particle diameter (D50) in a range of about 3 µm to about 20 µm (*e.g.,* the negative electrode active material PTC includes (*e.g.,* is in a form of) a plurality of aggregates, each aggregate including the coating layer CTL, and the average particle diameter (D50) of the plurality of aggregates is in a range of about 3 µm to about 20 µm). For example, in one or more embodiments of the present disclosure, the average particle diameter (D50) may be measured through a particle size analyzer. The average particle diameter (D50) may indicate a particle diameter when a cumulative volume is about 50 vol% in particle size distribution. The negative electrode active material PTC, when having an average particle diameter (D50) satisfying the above-described range, may exhibit excellent or suitable high-rate characteristics and cycle characteristics.

The aggregate may be an aggregate in which a plurality of composites CPL are aggregated. For example, one aggregate may include a plurality of composites CPL that are aggregated with each other. The aggregate may be an aggregate of at least two composites. The plurality of composites CPL each contain silicon (Si) and carbon (C). The aggregate may be spherical or elliptical.

The aggregate (*e.g.,* the plurality of aggregates) may have an average particle diameter (D50) in a range of about 3 µm to about 20 µm. For example, the aggregates may have an average particle diameter (D50) in a range of about 3 µm to about 15 µm, or about 8 µm to about 10 µm. For example, according to one or more embodiments of in the present disclosure, the average particle diameter (D50) may be measured through a particle size analyzer. The average particle diameter (D50) may indicate a particle diameter when a cumulative volume is about 50 vol% in particle size distribution. The aggregates, when having an average particle diameter (D50) satisfying the above-described ranges, may exhibit excellent or suitable high-rate characteristics and cycle characteristics.

Referring to FIG. 8, the plurality of composites CPL each include a core COR, a first shell SHL1, and a second shell SHL2.

The core COR includes crystalline silicon CRS. For example, in a transmission electron microscope (TEM) image of the negative electrode active material PTC, an interplanar distance, or d-spacing, between the crystal planes of the crystalline silicon CRS may be in a range of about 0.29 nm to about 0.33 nm. The crystalline silicon CRS may enhance the capacity and efficiency of the negative electrode active material.

The crystalline silicon CRS may be provided in an amount A in a range of about 30 wt% to about 60 wt% with respect to a total weight of the negative electrode active material. For example, the amount A of the crystalline silicon CRS may be in a range of about 40 wt% to about 60 wt%, about 40 wt% to about 55 wt%, about 45 wt% to about 60 wt%, about 40 wt% to about 50 wt%, or about 50 wt% to about 55 wt% with respect to a total weight of the negative electrode active material. When the amount A of the crystalline silicon CRS satisfies the above-described ranges, a rechargeable lithium battery exhibiting excellent or suitable capacity and efficiency may be provided.

For example, the core COR may further include a silicon oxide film SOX on a surface of the crystalline silicon CRS. For example, the silicon oxide film SOX may include SiO₂. The silicon oxide film SOX may exhibit excellent or suitable mechanical strength, and may hardly be reactive to an electrolyte solution (*e.g.,* may have a low level of reactivity with an electrolyte solution).

For example, the silicon oxide film SOX may be discontinuously positioned on the surface of the crystalline silicon CRS, and may be positioned in an island type (kind) or dot type (kind). For example, the silicon oxide film SOX may be formed in patches or "islands" on a surface of the crystalline silicon CRS that are discontinuous, e.g. separate or not connected with each other, such that part of the crystalline silicon CRS is exposed. As another example, the silicon oxide film SOX may be continuously positioned on the surface of the crystalline silicon CRS, and may be positioned in a layer. Accordingly, the silicon oxide film SOX may effectively inhibit or reduce volume expansion of the crystalline silicon CRS during charging and discharging, and may prevent or reduce structural collapse. In one or more embodiments, the silicon oxide film SOX may reduce an area where the crystalline silicon CRS is exposed to the electrolyte solution. The silicon oxide film SOX may prevent or reduce side reactions of the electrolyte solution.

The silicon oxide film SOX may have a thickness of about 50 nm or less. For example, the thickness of the silicon oxide film SOX may be in a range about 2 nm to about 50 nm. For example, the thickness of the silicon oxide film SOX may indicate a value obtained by measuring the thickness of the silicon oxide film SOX included in each of 100 negative electrode active materials (or cores COR) randomly selected from an electron microscope image of the negative electrode active material (or cores COR). For example, the thickness of the silicon oxide film SOX may be measured through the electron microscope image and component analysis. The thickness of the silicon oxide film SOX may be defined as a distance from a surface of the crystalline silicon CRS to an outermost surface of the silicon oxide film SOX. When the thickness of the silicon oxide film SOX satisfies the above-described ranges, the silicon oxide film SOX may effectively inhibit or reduce volume expansion of the crystalline silicon CRS during charging and discharging, and may prevent or reduce side reactions of the electrolyte solution.

The core COR is not limited in shape. For example, the shape of the core COR may be plate-like or spherical. For example, the shape of the core COR may be a flake type (kind).

The core COR may have an average particle diameter (D50) in a range of about 10 nm to about 200 nm. When the average particle diameter (D50) of the core COR satisfies the above-described range, the volume expansion of the core COR, during charging and discharging, may be controlled or selected, and structural collapse may be prevented or reduced.

For example, the core COR may have a major axis and a minor axis. For example, the major axis may be a width (or length) of the core COR, and the minor axis may be a thickness of the core COR. For example, the core COR may have an aspect ratio (major axis/minor axis) in a range of about 5 to about 20. When the aspect ratio of the core COR satisfies the above-described range, the volume expansion of the core COR, during charging and discharging, may be controlled or selected, and structural collapse may be prevented or reduced.

The first shell SHL1 is arranged on the core COR. The first shell SHL1 includes amorphous silicon. The amorphous silicon may enhance capacity and efficiency of the negative electrode active material PTC. The amorphous silicon may further increase the lifespan of the negative electrode active material PTC.

For example, the first shell SHL1 in the composite CPL may be distinguished through a component analysis, high-resolution transmission electron microscopy (HRTEM) and/or the like, of the negative electrode active material.

The amorphous silicon may be provided in an amount B in a range of about 5 wt% to about 30 wt% with respect to a total weight of the negative electrode active material. For example, the amount B of the amorphous silicon may be in a range of about 5 wt% to about 25 wt%, or about 10 wt% to about 20 wt% with respect to a total weight of the negative electrode active material. In one or more embodiments, the thickness of the first shell SHL1 may be in a range of about 5 nm to about 50 nm. For example, the thickness of the first shell SHL1 may be in a range of about 10 nm to about 20 nm. For example, the thickness may be the average thickness measured at 30 arbitrary locations on the cross-section of the negative electrode active material in an electron microscope image.

When the amount B of the amorphous silicon and the thickness of the first shell SHL1 satisfy the above-described ranges, a rechargeable lithium battery exhibiting excellent or suitable capacity, efficiency, and lifespan characteristics may be provided.

The second shell SHL2 is arranged on the first shell SHL1. The second shell SHL2 includes a first amorphous carbon. For example, the first amorphous carbon may include at least one selected from the group consisting of non-graphitizable carbon (hard carbon) and/or graphitizable carbon (soft carbon). The first amorphous carbon may have excellent or suitable hardness.

The second shell SHL2 may have a D band (peak position: about 1350±50 cm⁻¹) and a G band (peak position: about 1580±50 cm⁻¹) in a Raman spectrum obtained through Raman spectroscopy analysis. Herein, a D/G value may be defined as a ratio of a maximum peak intensity of the D band to a maximum peak intensity of the G band.

For example, the D/G ratio of the second shell SHL2 may be in a range of about 1.0 or greater. For example, the D/G ratio of the second shell SHL2 may be in a range of about 1.0 to about 1.5.

For example, the second shell SHL2 in the composite CPL may be distinguished through a component analysis, a Raman analysis, and/or the like on or of the negative electrode active material.

The first amorphous carbon may be provided in an amount E in a range of about 10 wt% to about 40 wt% with respect to a total weight of the negative electrode active material. For example, the amount E of the first amorphous carbon may be in a range of about 10 wt% to about 30 wt%, about 15 wt% to about 25 wt%, or about 20 wt% to about 30 wt% with respect to a total weight of the negative electrode active material. In one or more embodiments, the thickness of the second shell SHL2 may be in a range of about 5 nm to about 50 nm. For example, the thickness of the second shell SHL2 may be in a range of about 10 nm to about 20 nm. For example, the thickness may be the average thickness measured at 30 arbitrary locations on the cross-section of the negative electrode active material in an electron microscope image.

When the amount E of the first amorphous carbon and the thickness of the second shell SHL2 satisfy the above-described ranges, the second shell SHL2 may have excellent or suitable hardness, the negative electrode active material PTC may keep a structure thereof (*e.g.,* the negative electrode active material PTC may maintain its structure), and a rechargeable lithium battery may have increased lifespan.

Referring back to FIG. 7, the coating layer CTL is around (*e.g.,* surrounds) the aggregate (*e.g.,* the aggregate including the plurality of composites CPL). The coating layer CTL includes a second amorphous carbon. The second amorphous carbon may be around (*e.g.,* surround) an outer portion of the aggregate.

For example, the second amorphous carbon may include at least one selected from the group consisting of non-graphitizable carbon (hard carbon) and/or graphitizable carbon (soft carbon). The second amorphous carbon may have excellent or suitable hardness. The second amorphous carbon may be the same as or different from the first amorphous carbon described above.

The coating layer CTL may have a D band (peak position: about 1350±50 cm⁻¹) and a G band (peak position: about 1580±50cm⁻¹) in a Raman spectrum obtained through Raman spectroscopy analysis. For example, the D/G ratio of the coating layer CTL may be about 1.0 or greater. For example, the D/G ratio of the coating layer CTL may be in a range of about 1.0 to about 1.5.

For example, the coating layer CTL in the negative electrode active material PTC may be distinguished through a component analysis, a Raman analysis, and/or the like on or of the negative electrode active material.

The second amorphous carbon may be provided in an amount F in a range of about 2 wt% to about 10 wt% with respect to a total weight of the negative electrode active material. For example, the amount F of the second amorphous carbon may be about 5 wt% with respect to a total weight of the negative electrode active material. In one or more embodiments, the coating layer CTL may have a thickness in a range of about 5 nm to about 50 nm. For example, the thickness of the coating layer CTL may be in a range of about 10 nm to about 20 nm. For example, the thickness may be the average thickness measured at 30 arbitrary locations on the cross-section of the negative electrode active material in an electron microscope image.

When the amount F of the second amorphous carbon and the thickness of the coating layer CTL satisfy the above-described ranges, the second shell SHL2 may have excellent or suitable hardness, and the negative electrode active material may keep a structure thereof (e.g., the negative electrode active material PTC may maintain its structure).

The coating layer CTL may further include a grain boundary coating layer around (*e.g.,* surrounding) a surface of each of the plurality of composites CPL. The grain boundary coating layer may be present inside the negative electrode active material PTC. The grain boundary coating layer may be formed by being applied along interfaces between the plurality of composites CPL. For example, the grain boundary coating layer may indicate a material applied onto the grain boundary inside the negative electrode active material PTC. The grain boundary coating layer may include the second amorphous carbon.

The inside of the negative electrode active material PTC, described above, may indicate an entire inside portion of the negative electrode active material PTC excluding the surface of the negative electrode active material PTC. For example, the inside of the negative electrode active material PTC may indicate an entire inner portion from about 5 nm to about 50 nm in depth, with respect to the surface of the negative electrode active material PTC.

The coating layer CTL further includes the grain boundary coating layer, and thus the negative electrode active material PTC may have greater structural stability and enhanced electrical conductivity.

The coating layer CTL may prevent or reduce the likelihood of the aggregate and the plurality of composites CPL being exposed to the electrolyte solution. The coating layer CTL may inhibit or reduce volume expansion of the aggregate and the plurality of composites CPL. In one or more embodiments, the coating layer CTL serves as a migration path of electrons between the second amorphous carbon, the plurality of composites CPL, and the electrolyte solution, and thus a negative electrode having decreased resistance and enhanced electrical conductivity may be provided.

The components in the negative electrode active material, according to one or more embodiments of the present disclosure, may be present in the following ratios.

A ratio (B/A) of the amount of the amorphous silicon to the amount of the crystalline silicon may be in a range of about 0.1 to about 0.4. For example, the ratio (B/A) of the amount of the amorphous silicon to the amount of the crystalline silicon may be in a range of about 0.15 to about 0.4, or about 0.3 to about 0.4. When the ratio (B/A) of the amount of the amorphous silicon to the amount of the crystalline silicon satisfies the above-described ranges, a rechargeable lithium battery may exhibit excellent or suitable capacity, efficiency, and lifespan characteristics.

The amorphous carbon in the negative electrode active material PTC may be provided in a total amount C in a range of about 20 wt% to about 40 wt% with respect to a total weight of the negative electrode active material. The total amount C of the amorphous carbon may be defined as a sum of the amount E of the first amorphous carbon in the negative electrode active material PTC and the amount F of the second amorphous carbon in the negative electrode active material PTC. For example, the first amorphous carbon and the second amorphous carbon in the negative electrode active material PTC may be provided in the total amount C in a range of about 25 wt% to about 35 wt% with respect to a total weight of the negative electrode active material.

The crystalline silicon and the amorphous silicon in the negative electrode active material PTC may be provided in a total amount D in a range of about 35 wt% to about 90 wt% on with respect to a total weight of the negative electrode active material. The total amount D of the crystalline silicon and the amorphous silicon may be defined as a sum of the amount A of the crystalline silicon in the negative electrode active material PTC and the amount B of the amorphous silicon in the negative electrode active material PTC. For example, the total amount D of the crystalline silicon and the amorphous silicon in the negative electrode active material PTC may be in a range of about 60 wt% to about 80 wt%, or about 65 wt% to about 75 wt% with respect to a total weight of the negative electrode active material.

A ratio (C/D) of the total amount of the first amorphous carbon and the second amorphous carbon to the total amount of the crystalline silicon and the amorphous silicon may be in a range of about 0.3 to about 0.6. When the ratio (C/D) of the total amount of the first amorphous carbon and the second amorphous carbon to the total amount of the crystalline silicon and the amorphous silicon satisfies the above-described range, a rechargeable lithium battery may exhibit excellent or suitable capacity, efficiency, and lifespan characteristics.

FIG. 9 is a view for describing a negative electrode active material according to one or more embodiments of the present disclosure. Hereinafter, for the convenience of description, the same contents as those described with reference to FIGS. 7 and 8 may not be repeated, and the differences are mainly described in more detail below.

Referring to FIG. 9, a negative electrode active material PTC may further include crystalline carbon CRC. For example, the negative electrode active material PTC may further include the crystalline carbon CRC together with the aggregate (*e.g.,* the aggregate of the plurality of composites CPL). For example, the crystalline carbon CRC may include at least one selected from the group consisting of natural graphite and artificial graphite. For example, the crystalline carbon CRC may be natural graphite, artificial graphite, and/or a (*e.g.,* any suitable) combination thereof. The crystalline carbon CRC may have high ductility and excellent or suitable electrical conductivity.

The crystalline carbon CRC may be provided in an amount in a range of about 0 wt% to about 20 wt% with respect to a total weight of the negative electrode active material. For example, the amount of the crystalline carbon CRC may be about 2 wt% to about 7 wt% with respect to a total weight of the negative electrode active material. When the amount of the crystalline carbon CRC satisfies the above-described ranges, the negative electrode active material PTC may keep a structure thereof (*e.g.,* the negative electrode active material PTC may maintain its structure), and a negative electrode exhibiting greater electrical conductivity may be provided. Therefore, a rechargeable lithium battery exhibiting excellent or suitable output, capacity, efficiency, and lifespan characteristics may be provided.

The negative electrode active material PTC according to one or more embodiments of the present disclosure may have a porous structure. The negative electrode active material PTC may have a BET specific surface area in a range of about 1 m²/g to about 10 m²/g, or about 5 m²/g to about 10 m²/g. For example, the BET specific surface area may be measured using a surface area and porosity analyzer (ASAP series, Micromeritics Instrument Corp.).

A rechargeable lithium battery according to one or more embodiments of the present disclosure includes a positive electrode, a negative electrode, and a separator, the negative electrode includes a current collector and a negative electrode active material layer, the negative electrode active material layer including the negative electrode active material described herein and graphite. The negative electrode active material is provided in an amount in a range of about 5 wt% to about 40 wt% with respect to a total weight of the negative electrode active material layer, and the graphite is provided in an amount in a range of about 60 wt% to about 95 wt% with respect to a total weight of the negative electrode active material layer.

A rechargeable lithium battery including the negative electrode active material PTC according to one or more embodiments of the present disclosure may exhibit excellent or suitable efficiency, capacity, and lifespan characteristics. The negative electrode active material PTC includes crystalline silicon, and thus the rechargeable lithium battery including the negative electrode active material PTC according to one or more embodiments of the present disclosure may have a voltage plateau in a voltage range of about 0.4 V to about 0.5 V. For example, the rechargeable lithium battery including the negative electrode active material PTC according to one or more embodiments of the present disclosure may have a voltage plateau at a voltage in a range of about 0.43 V to about 0.47, or about 0.45 V.

### Method for Preparing Negative Electrode Active Material

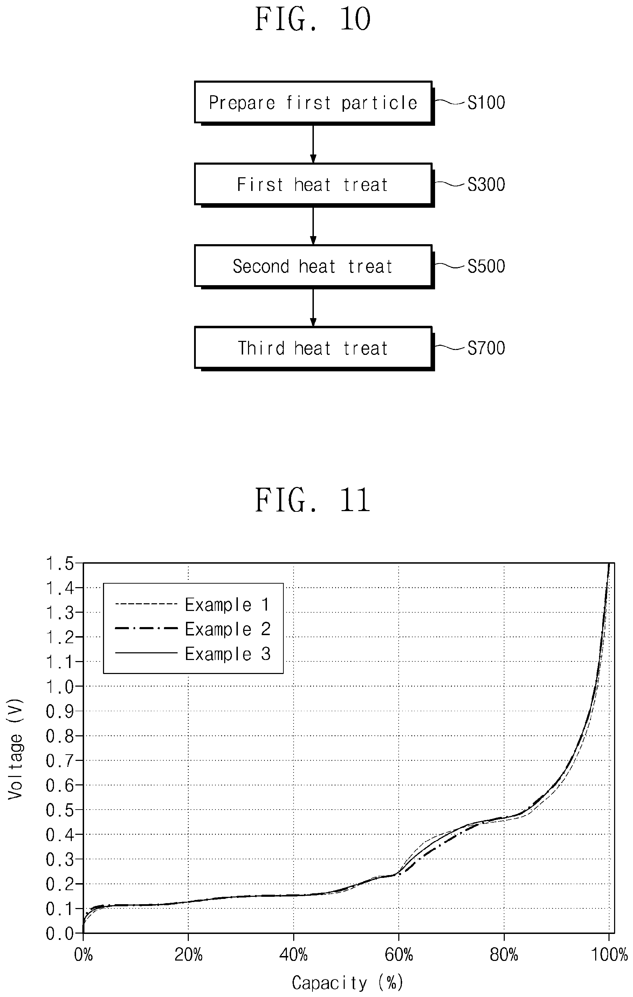

FIG. 10 is a flowchart for describing a method for preparing a negative electrode active material according to one or more embodiments of the present disclosure.

Referring to FIG. 10, a method for preparing a negative electrode active material according to one or more embodiments of the present disclosure includes spray drying a dispersion containing a first silicon precursor and a solvent to prepare a first particle (S100); first heat treating the first particle and a second silicon precursor to prepare a second particle (S300); second heat treating the second particle and a first carbon precursor to prepare a third particle (S500); and third heat treating the third particle and a second carbon precursor (S700).

The first particle is prepared by spray drying the dispersion containing the first silicon precursor and the solvent (S100).

The first silicon precursor may be nanosized. For example, the first silicon precursor may have an average particle diameter (D50) in a range of about 10 nm to about 200 nm, about 30 nm to about 100 nm, about 50 nm to about 100 nm, or about 85 nm to about 100 nm.

For example, the first silicon precursor may be prepared as silicon particles having the above-described average particle diameter (D50).

As another example, the first silicon precursor may be prepared (obtained) by grinding micro-sized silicon particles (*e.g.,* grinding the silicon particles into micro-sized silicon particles, where "micro-sized" is a size in a range of about 1 µm to less than 1 mm). For example, the micro-sized silicon particle may have an average particle diameter (D50) in a range of about 1 µm to about 5 µm. For example, the grinding may include ball milling and/or the like. For example, the first silicon precursor may be formed in a top-down manner.

The solvent may include alcohol. For example, the solvent may include at least one selected from the group consisting of isopropyl alcohol, ethanol, and/or butanol.

The dispersion may further include a dispersant. The dispersant may further disperse the first silicon precursor. For example, the dispersant may include stearic acid, but the present disclosure is not limited to the example.

The spray drying may be performed at a temperature in a range of about 100 °C to about 170 °C. When the spray drying is performed at the above-described temperature, the first silicon precursors may be densely assembled to form a first particle, and the first particle may have a porous structure.

The prepared first particle may be a secondary particle in which a plurality of first silicon precursors are aggregated. For example, the first particle may have an average particle diameter (D50) in a range of about 3 µm to about 20 µm. Through the steps (*e.g.,* acts or tasks) to be described in more detail later, the negative electrode active material shown in FIG. 7 may be prepared.

In one or more embodiments, the dispersion may further include crystalline carbon. For example, the crystalline carbon may include at least one selected from the group consisting of natural graphite and artificial graphite. Accordingly, through the steps (*e.g.,* acts or tasks) to be described in more detail later, the negative electrode active material shown in FIG. 9 may be prepared. For example, the first particle may include a secondary particle in which the plurality of first silicon precursors and the crystalline carbon are aggregated.

The second particle is prepared by performing the first heat treatment of the first particle and the second silicon precursor (S300).

The second silicon precursor may be a silicon raw material. For example, the second silicon precursor may include at least one of SiH₄ gas, Si₂H₅ gas, or SiCl₄ gas. For example, the second silicon precursor may be provided onto the first particle in the form of a gas.

The first heat treating may be performed through chemical vapor deposition (CVD). By using the chemical vapor deposition (CVD), microscopic silicon (*e.g.,* nano-sized silicon, where "nano-sized" refers to having a size in a range of about 1 nm to less than about 1 µm) may be provided into pores in the first particle. Accordingly, the amount of silicon in the negative electrode active material PTC may be increased, and a rechargeable lithium battery may exhibit enhanced capacity, efficiency, and lifespan characteristics.

The second silicon precursor may be provided such that the amount of the amorphous silicon in a finally-prepared negative electrode active material satisfies a desired or suitable range (see, *e.g.,* FIG. 7 and the associated description).

The first heat treatment is performed at a temperature in a range of about 450 °C to about 600 °C.

In this step (*e.g.,* act or task), the second silicon precursor may be provided onto the first particle. The second silicon precursor may be inserted into pores in the first particle. Through the first heat treating, amorphous silicon may be formed. For example, the amorphous silicon may be formed in a bottom-up manner. The amorphous silicon may be around (*e.g.,* surround) each of the plurality of first silicon precursors in the first particle. Accordingly, the second particle, including the first particle in which the plurality of first silicon precursors are aggregated, and the amorphous silicon around (*e.g.,* surrounding) each of the plurality of first silicon precursors, may be prepared. The preparing of the second particle may include forming a first shell containing amorphous silicon (*see, e.g.,* the first shell SHL1 of FIG. 8). The second particle may have a porous structure.

The third particle is prepared by performing the second heat treatment of the second particle and the first carbon precursor (S500).

For example, the first carbon precursor may include at least one selected from the group consisting of petroleum-based coke, coal-based coke, petroleum-based pitch, coal-based pitch, and/or green coke. The first carbon precursor may be mixed with the second particle.

The first carbon precursor may be mixed or provided such that the amount of the first amorphous carbon in a finally prepared negative electrode active material satisfies a desired or suitable range (*see, e.g.,* FIG. 7 and the associated description).

The second heat treatment is performed at a temperature in a range of about 800 °C to about 1000 °C.

In one or more embodiments, the first carbon precursor may include at least one gas selected from the group consisting of acetylene, methane, and/or ethylene. For example, the first carbon precursor may be provided in the form of gas on the second particle. In such embodiments, the second heat treating may be performed through chemical vapor deposition (CVD).

In this step (*e.g.,* act or task), the first carbon precursor may be provided on the second particle. The first carbon precursor may be inserted into pores in the second particle. Through the second heat treating, first amorphous carbon may be formed. For example, the first amorphous carbon may be formed in a bottom-up manner. The first amorphous carbon may be around (*e.g.,* surround) the first silicon precursor and the amorphous silicon. Accordingly, the third particle, including the first particle in which the plurality of first silicon precursors are aggregated, the amorphous silicon around (*e.g.,* surrounding) each of the first silicon precursors, and the first amorphous carbon around (*e.g.,* surrounding) the amorphous silicon, may be prepared. The preparing of the third particle may include forming a second shell containing amorphous carbon (*see, e.g.,* the second shell SHL2 of FIG. 8). The third particle may have a porous structure.

By the third heat treating of the third particle and the second carbon precursor, the negative electrode active material PTC (*see, e.g.,* FIG. 7 and the associated description) according to one or more embodiments of the present disclosure may be prepared.

The second carbon precursor may be the same as or different from the first carbon precursor described above.

For example, the second carbon precursor may include at least one selected from the group consisting of petroleum-based coke, coal-based coke, petroleum-based pitch, coal-based pitch, and/or green coke. The second carbon precursor may be mixed with the third particle.

The second carbon precursor may be mixed or provided such that the amount of the second amorphous carbon in a finally-prepared negative electrode active material satisfies a desired or suitable range (*see, e.g.,* FIG. 7 and the associated description).

The third heat treatment is performed at a temperature in a range of about 800 °C to about 1000 °C.

In one or more embodiments, the second carbon precursor may include at least one gas selected from the group consisting of acetylene, methane, and/or ethylene. For example, the second carbon precursor may be provided onto the third particle in the form of a gas. In such embodiments, the third heat treating may be performed through chemical vapor deposition (CVD).

In this step (*e.g.,* act or task), the second carbon precursor may be provided onto the third particle. The second carbon precursor may be inserted into pores in the third particle. Through the third heat treating, second amorphous carbon may be formed. For example, the second amorphous carbon may be formed in a bottom-up manner. The second amorphous carbon may be around (*e.g.,* surround) the entire third particle. In one or more embodiments, the second amorphous carbon may be around (*e.g.,* surround) the first silicon precursor, the amorphous silicon, and the first amorphous carbon. This step (*e.g.,* act or task) may include forming a coating layer (*see, e.g.,* the coating layer CTL of FIG. 7). Therefore, the negative electrode active material described above may be prepared (*see, e.g.,* FIGS. 7 and 9 and their associated description).

Hereinafter, the present disclosure will be described in more detail through Examples. However, the Examples are only illustrations for describing the present disclosure, and the scope of the present disclosure is not limited to Examples.

### Example 1

A negative electrode active material, including an aggregate in which a plurality of composites were aggregated and a coating layer around (*e.g.,* surrounding) the aggregate, was prepared. The plurality of composites each included a core, a first shell, and a second shell. The core included crystalline silicon, the first shell included amorphous silicon, and the second shell included first amorphous carbon. The coating layer included second amorphous carbon. The crystalline silicon, the amorphous silicon, the first amorphous carbon, and the second amorphous carbon were respectively provided in amounts of about 55 wt%, about 20 wt%, about 20 wt%, and about 5 wt% with respect to a total weight of the negative electrode active material. The negative electrode active material was prepared in the following method.

Micro-sized silicon particles (having an average particle diameter (D50) in a range of about 1 µm to about 5 µm) were ball milled to prepare a first silicon precursor having an average particle diameter (D50) in a range of about 85 nm to about 100 nm. The first silicon precursor, stearic acid, and ethanol were mixed in a weight ratio of about 9:1:110 to prepare a dispersion. Using a spray drier, the dispersion was spray dried at a temperature of about 120 °C (S100).

Using chemical vapor deposition, the amorphous silicon was formed on the product of the spray drying. SiH₄ gas was provided onto the product of the spray drying, and first heat treated at a temperature of about 600 °C to form the amorphous silicon (S300). The duration of the first heat treating was in a range of about 3 hours to about 5 hours.

The product of the first heat treating and meso-carbon pitch were mixed in a weight ratio of about 75:20, and the mixture was second heat treated at a temperature in a range of about 800 °C to about 1000 °C in a N₂ atmosphere to form the first amorphous carbon (S500).

The product of the second heat treating and meso-carbon pitch were mixed in a weight ratio of about 95:5, and the mixture was third heat treated at a temperature in a range of about 800 °C to about 1000 °C in a N₂ atmosphere to form the second amorphous carbon (S700).

For example, the negative electrode active material was developed, composed of the aggregates of the multiple composites, each surrounded by the coating layer. The composites include the core of crystalline silicon, the first shell of amorphous silicon, and the second shell of first amorphous carbon. The coating layer is made of second amorphous carbon. Specifically, each composite includes the core of crystalline silicon, the first shell of amorphous silicon, and the second shell of first amorphous carbon. These composites are then aggregated and surrounded by the coating layer of second amorphous carbon. The weight percentages of these components are about 55% crystalline silicon, about 20% amorphous silicon, about 20% first amorphous carbon, and about 5% second amorphous carbon.

Micro-sized silicon particles (1-5 µm) were ball milled to produce a silicon precursor with an average particle diameter (D50) of 85-100 nm. The silicon precursor was mixed with stearic acid and ethanol in a weight ratio of 9:1:110 to form a dispersion, which was then spray dried at 120°C (S100). The spray-dried product underwent chemical vapor deposition using SiH₄ gas and was heat-treated at 600°C for 3-5 hours to form amorphous silicon (S300). The heat-treated product was mixed with meso-carbon pitch in a weight ratio of 75:20 and heat-treated at 800-1000°C in a nitrogen atmosphere to form the first amorphous carbon (S500). Finally, the product was mixed with meso-carbon pitch in a weight ratio of 95:5 and heat-treated again at 800-1000°C in a nitrogen atmosphere to form the second amorphous carbon (S700).

### Example 2

A negative electrode active material was prepared in substantially the same manner as in Example 1, except that amorphous silicon and first amorphous carbon were provided in an amount of 10 wt% and about 30 wt%, respectively, with respect to a total weight of the negative electrode active material.

In addition, in S300, the duration of first heat treating was in a range of about 1 hour to about 3 hours, and in S500, the product of the first heat treating and meso-carbon pitch were mixed in a weight ratio of about 65:30.

### Example 3

A negative electrode active material was prepared in substantially the same manner as in Example 1, except that crystalline silicon and amorphous silicon were provided in an amount of about 50 wt% and 15 wt%, respectively, with respect to a total weight of the negative electrode active material, and crystalline carbon (graphite) was further included (in an amount of about 5 wt% with respect to a total weight of the negative electrode active material).

In addition, in S100, a first silicon precursor, crystalline carbon (graphite), stearic acid, and ethanol were mixed in a weight ratio of about 8.2:0.8:1:110 as a dispersion, in S300, the duration of first heat treating was in a range of about 2 to about 4 hours, and in S500, the product of the first heat treating and meso-carbon pitch were mixed in a weight ratio of about 65:20.

### Comparative Example 1

A negative electrode active material was prepared in substantially the same manner as in Example 1, except that amorphous silicon and first amorphous carbon were provided in an amount of about 30 wt% and about 15 wt%, respectively, with respect to a total weight of the negative electrode active material, and no second amorphous carbon was included.

In addition, in S300, the duration of first heat treating was in a range of about 5 hours to about 7 hours, in S500, the product of the first heat treating and meso-carbon pitch were mixed in a weight ratio of about 85:15, and S700 was skipped (*e.g.,* the second carbon precursor (*e.g.,* the meso-carbon pitch) was not provided and the third heat treatment was not conducted to form the second amorphous carbon).

### Comparative Example 2

A negative electrode active material was prepared in substantially the same manner as in Example 1, except that amorphous silicon and first amorphous carbon were provided in an amount of about 40 wt% and about 5 wt%, respectively, with respect to a total weight of the negative electrode active material, and no second amorphous carbon was included.

In addition, in S300, the duration of first heat treating was in a range of about 7 hours to about 9 hours, in S500, the product of the first heat treating and meso-carbon pitch were mixed in a weight ratio of about 95: 5, and S700 was skipped (*e.g.,* the second carbon precursor (*e.g.,* the meso-carbon pitch) was not provided and the third heat treatment was not conducted to form the second amorphous carbon).

### Comparative Example 3

A negative electrode active material was prepared in substantially the same manner as in Example 1, except that amorphous silicon and second amorphous carbon were not included, and amorphous carbon was provided in an amount of about 45 wt% with respect to a total weight of the negative electrode active material.

In addition, S300 and S700 were skipped (*e.g.,* the second silicon precursor (*e.g.,* SiH₄ gas) was not provided and the first heat treatment was not conducted to form the amorphous silicon, and the second carbon precursor (*e.g.,* the meso-carbon pitch) was not provided and the third heat treatment was not conducted to form the second amorphous carbon), and in S500, the product of the spray drying and meso-carbon pitch were mixed in a weight ratio of about 55:45.

### Preparation of Rechargeable Lithium Battery

The prepared negative electrode active material and natural graphite (from BTR New Material Group Co., Ltd. in China) were mixed to achieve a capacity of 500 mAh/g. 98 wt% of the mixed negative electrode active material (in a weight ratio of the prepared negative electrode active material : natural graphite = 10:88), 1 wt% of carboxymethyl cellulose, and 1 wt% of styrene-butadiene rubber were mixed in distilled water to prepare a slurry. The slurry was applied to Cu foil, dried, and roll pressed to prepare a negative electrode.

96 wt% of LiCoO₂, 2 wt% of polyvinylidene fluoride (PVdF), and 2 wt% of carbon black were mixed in N-methylpyrrolidone, and then applied to Al foil, dried, and roll pressed to prepare a positive electrode.

The negative electrode, the positive electrode, a polyethylene separator, and an electrolyte solution were used to manufacture a coin full cell. As an electrolyte solution, 1.5 M LiPF₆ was dissolved in an organic solvent where ethylene carbonate (EC), diethyl carbonate (DEC), and dimethyl carbonate (DMC) were mixed in a volume ratio of about 2:1:7, and 3 parts by weight of fluoroethylene carbonate (FEC) were added with respect to 100 parts by weight of the organic solvent to provide the electrolyte solution.

In addition, 0.5 mm of Li metal was applied as a counter electrode, among the components of the coin full cell, to manufacture a coin half cell.

### Evaluation Example 1: Analysis of Negative Electrode Active Material

Analyses on the structures and components of the negative electrode active materials according to Examples 1 to 3 and Comparative Examples 1 to 3 were performed. From the results of transmission electron microscopy (TEM) images, component analyses, and Raman spectroscopy analyses on the negative electrode active materials according to Examples 1 to 3 and Comparative Examples 1 to 3, d-spacing values, a ratio (B/A) of the amount of amorphous Si/the amount of crystalline Si, a ratio (C/D) of (total amount of first amorphous carbon and second amorphous carbon)/(total amount of crystalline Si and amorphous Si), and a value of D/G (a ratio of a maximum peak intensity of the D band/a maximum peak intensity of the G band) were obtained. The Raman spectrum was obtained using a Raman spectrophotometer (NRS-1000, Nippon Spectrometer Co., Ltd.). The results are shown in Tables 1 and 2.

**Table 1**

| Item | Amount of crystalline Si (wt%) | Amount of amorphous Si (wt%) | Amount of first amorphous carbon (wt%) | Amount of second amorphous carbon (wt%) | Amount of crystalline carbon (wt%) |
|---|---|---|---|---|---|
| Example 1 | 55 | 20 | 20 | 5 | |
| Example 2 | 55 | 10 | 30 | 5 | |
| Example 3 | 50 | 15 | 20 | 5 | 5 |
| Comparative Example 1 | 55 | 30 | 15 | | |
| Comparative Example 2 | 55 | 40 | 5 | | |
| Comparative Example 3 | 55 | | 45 | | |

**Table 2**

| Item | Ratio of amorphous Si amount/crystalline Si amount (B/A) | Ratio of (total amount of first amorphous carbon and second amorphous carbon)/(total amount of crystalline Si and amorphous Si) (C/D) |
|---|---|---|
| Example 1 | 0.36 | 0.33 |
| Example 2 | 0.18 | 0.54 |
| Example 3 | 0.3 | 0.38 |
| Comparative Example 1 | 0.55 | 0.18 |
| Comparative Example 2 | 0.73 | 0.05 |
| Comparative Example 3 | 0 | 0.82 |

Referring to Tables 1 and 2, as a result of the TEM image analysis, the negative electrode active materials according to Examples 1 to 3 included an aggregate in which a plurality of composites were aggregated and a coating layer around (*e.g.,* surrounding) the aggregate. The plurality of composites each included a core, a first shell, and a second shell.

The core and the first shell included silicon, and the second shell and the coating layer included carbon. The core had a d-spacing value in a range of about 0.29 nm to about 0.33 nm, and therefore, it is determined that the core contained crystalline silicon. The first shell had no crystallinity, and therefore, it is determined that the first shell contained amorphous silicon. The second shell and the coating layer each had a ratio D/G of about 1.0, and therefore, it is determined that the first shell and the coating layer each contained amorphous carbon.

### Evaluation Example 2: Evaluation of Battery Properties

Characteristics of rechargeable lithium batteries including the negative electrode active materials according to Examples 1 to 3 and Comparative Examples 1 to 3 were evaluated.

For evaluating initial efficiency, the coin half cells were initially charged at a constant current of 0.1 C and after 10 minutes of rest, discharged up to 1.5 V at a constant current of 0.1 C, and then charge and discharge capacities were evaluated. The ratio of the measured discharge capacity to the measured charge capacity was calculated, and expressed as efficiency.

For evaluating lifespan retention, the coin full cells were initially charged at a constant current of 0.2 C and after 10 minutes of rest, discharged up to 2.5 V at a constant current of 0.2 C, and then discharge capacity was evaluated. Lifespan retention was evaluated by the ratio of the discharge capacity measured after performing 500 cycles of charging and discharging in substantially the same condition compared to the discharge capacity measured after performing 1 cycle.

The results of evaluating battery properties are shown in FIG. 11 and Table 3.

**Table 3**

| Item | Charge amount (mAh/g) | Discharge amount (mAh/g) | Efficiency (%) | Lifespan (%) |
|---|---|---|---|---|
| Example 1 | 544 | 503 | 92.5 | 84 |
| Example 2 | 538 | 495 | 92.1 | 86 |
| Example 3 | 538 | 497 | 92.4 | 86 |
| Comparative Example 1 | 551 | 507 | 91.9 | 63 |
| Comparative Example 2 | 543 | 498 | 91.8 | 59 |
| Comparative Example 3 | 544 | 496 | 91.1 | 79 |

Referring to FIG. 11, it is determined that the rechargeable lithium batteries including the negative electrode active materials according to Examples 1 to 3 had a voltage plateau in a voltage range of about 0.43 V to about 0.47 V.

Referring to Table 3, it is determined that the rechargeable lithium batteries including the negative electrode active materials according to Examples 1 to 3 exhibited excellent or suitable efficiency, capacity, and lifespan characteristics.

A negative electrode active material according to one or more embodiments of the present disclosure and a rechargeable lithium battery including the same may exhibit enhanced (*e.g.,* excellent or suitable) capacity, efficiency, and lifespan characteristics. For example, the structural design of the negative electrode active material, which includes a core of crystalline silicon, a first shell of amorphous silicon, a second shell of amorphous carbon, and a coating layer of amorphous carbon, contributes to these enhanced characteristics. The crystalline silicon core provides high capacity for lithium intercalation, while the amorphous silicon in the first shell acts as a buffer layer to accommodate volume changes during cycling, thereby improving the lifespan of the electrode. The amorphous carbon in both the second shell and the coating layer enhances conductivity and stability, ensuring consistent electrochemical performance. This combination of materials and structural integrity results in a negative electrode active material that offers superior capacity, efficiency, and lifespan compared to comparable materials.

Using a method for preparing a negative electrode active material according to one or more embodiments of the present disclosure, a negative electrode active material exhibiting enhanced (e.g., excellent or suitable) capacity, efficiency, and lifespan characteristics may be prepared. For example, the preparation method involves precise control of particle size, mixing ratios, and heat treatment conditions to ensure the formation of the desired composite structures. For example, the ball milling process may reduce the silicon particles to the optimal size for intercalation, while the spray drying and heat treatment steps ensure uniform distribution of the carbon and silicon layers. Chemical vapor deposition may be utilized to form the amorphous silicon layer, providing a buffer for volume changes during cycling. The final heat treatment step ensures the formation of the amorphous carbon coating layer, which enhances conductivity and stability. This preparation method results in a negative electrode active material with enhanced electrochemical properties, making it suitable for high-performance rechargeable lithium batteries.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. Unless otherwise defined, "substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

The electrode assembly, the electronic device, the vehicle, the battery, *e.g.,* a battery controller, a manufacturing device, and/or any other relevant devices or components according to embodiments of the present disclosure described herein may be implemented utilizing any suitable hardware, firmware (*e.g.,* an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. A negative electrode active material comprising:
an aggregate in which at least two composites are aggregated, the composites each comprising silicon (Si) and carbon (C); and
a coating layer around the aggregate,
wherein the composites each comprise:
a core comprising crystalline silicon;
a first shell comprising amorphous silicon on the core; and
a second shell comprising a first amorphous carbon on the first shell, and wherein the coating layer comprises a second amorphous carbon.

2. The negative electrode active material of claim 1, wherein
a weight percentage of the crystalline silicon is A wt% with respect to a total weight of the negative electrode active material,
a weight percentage of the amorphous silicon is B wt% with respect to the total weight of the negative electrode active material, and
a value of B/A is in a range of about 0.1 to about 0.4.

3. The negative electrode active material of claim 1 or claim 2, wherein
a total weight percentage of amorphous carbon in the negative electrode active material comprises weight percentages of both the first amorphous carbon and the second amorphous carbon and is C wt% with respect to a total weight of the negative electrode active material,
a total weight percentage of the crystalline silicon and the amorphous silicon in the negative electrode active material is D wt% with respect to the total weight of the negative electrode active material, and
a value of C/D is in a range of about 0.3 to about 0.6.

4. The negative electrode active material of any preceding claim, wherein the cores of the composites each comprise a silicon oxide film on a surface of the crystalline silicon.

5. The negative electrode active material of any preceding claim, wherein the crystalline silicon has a d-spacing value of about 0.29 nm to about 0.33 nm.

6. The negative electrode active material of any preceding claim, wherein the cores of the composites have an average particle diameter (D50) in a range of about 10 nm to about 200 nm.

7. The negative electrode active material of any preceding claim, further comprising crystalline carbon.

8. The negative electrode active material of any preceding claim, further comprising a plurality of aggregated bodies, the plurality of aggregated bodies comprising the aggregated body and having an average particle diameter (D50) in a range of about 3 µm to about 20 µm.

9. The negative electrode active material of any preceding claim, having a **BET** specific surface area in a range of about 1 m²/g to about 10 m²/g.

10. A rechargeable lithium battery comprising
a positive electrode,
a negative electrode, and
a separator,
wherein the negative electrode comprises a current collector and a negative electrode active material layer,
the negative electrode active material layer comprises the negative electrode active material of any one of claims 1 to 9 and graphite,
a weight percentage of the negative electrode active material is in a range of about 5 wt% to about 40 wt% with respect to a total weight of the negative electrode active material layer, and
a weight percentage of the graphite is in a range of about 60 wt% to about 95 wt% with respect to the total weight of the negative electrode active material layer.

11. The rechargeable lithium battery of claim 10, wherein the rechargeable lithium battery has a voltage plateau in a voltage range of about 0.4 V to about 0.5 V.

12. A method comprising:
spray drying a dispersion comprising a first silicon precursor and a solvent to prepare a first particle;
first heat treating the first particle and a second silicon precursor at a temperature in a range of about 450 °C to about 600 °C to prepare a second particle;
second heat treating the second particle and a first carbon precursor at a temperature in a range of about 800 °C to about 1000 °C to prepare a third particle; and
third heat treating the third particle and a second carbon precursor at a temperature in a range of about 800 °C to about 1000 °C,
wherein the method is a preparation method of a negative electrode active material.

13. The method of claim 12, further comprising grinding micro-sized silicon particles to prepare the first silicon precursor.

14. The method of claim 12 or claim 13, wherein the spray drying is performed at a temperature in a range of about 100 °C to about 170 °C.

15. The method of any of claims 12 to 14, wherein the first particle comprises a secondary particle in which a plurality of first silicon precursors are aggregated.
